(19) Europäisches Patentamt

European Patent Office

Office européen des brevets

(11) **EP 1 048 506 B1**

(12) **EUROPÄISCHE PATENTSCHRIFT**

(45) Veröffentlichungstag und Bekanntmachung des Hinweises auf die Patenterteilung:
**02.01.2004 Patentblatt 2004/01**

(51) Int Cl.$^7$: **B60K 31/00**, B62D 1/00

(21) Anmeldenummer: **00104044.3**

(22) Anmeldetag: **26.02.2000**

(54) **Mess- und Steuerungssystem zur Querregelung aufeinanderfolgender Fahrzeuge und Verfahren hierzu**

System for measuring and controlling the lateral deviation of the path of following vehicles from the path of a leading vehicle

Système pour la régulation de la déviation latérale entre deux véhicules

(84) Benannte Vertragsstaaten:
**ES FR GB IT SE**

(30) Priorität: **30.04.1999 DE 19919644**

(43) Veröffentlichungstag der Anmeldung:
**02.11.2000 Patentblatt 2000/44**

(73) Patentinhaber: **DaimlerChrysler AG**
**70567 Stuttgart (DE)**

(72) Erfinder:
• **Böttiger, Friedrich**
**73733 Esslingen (DE)**
• **Fritz, Hans Dr.**
**73061 Ebersbach/Fils (DE)**

(56) Entgegenhaltungen:
EP-A- 0 652 543          DE-A- 3 139 344
DE-A- 3 837 981          DE-A- 19 526 702
US-A- 5 332 057          US-A- 5 579 228

• BOLZERN P ET AL: "PATH-TRACKING FOR ARTICULATED VEHICLES WITH OFF-AXLE HITCHING" IEEE TRANSACTIONS ON CONTROL SYSTEMS TECHNOLOGY, IEEE INC. NEW YORK, US, Bd. 6, Nr. 4, 1. Juli 1998 (1998-07-01), Seiten 515-523, XP000768643 ISSN: 1063-6536

## Beschreibung

Die Erfindung betrifft ein Meß- und Steuerungssystem zur Querregelung aufeinanderfolgender Fahrzeuge und ein Verfahren hierzu nach dem Oberbegriff des Anspruches 1 bzw. 14.

Aus der gattungsgemäßen EP 0 652 543 A1 geht ein entsprechendes Meß- und Steuerungssystem hervor. Ferner ist aus der DE 44 07 082 A1 ein Fahrzeuggeschwindigkeits-Steuerungssystem für die Steuerung der Geschwindigkeit eines Fahrzeugs bekannt, welches einem vorausfahrenden Fahrzeug nachfolgt. In Abhängigkeit des Abstands und der Relativgeschwindigkeit werden in einer Regel- und Steuereinheit des Systems Stellsignale zur Einstellung des Getriebes und der Drosselklappe erzeugt, um geschwindigkeitsabhängig den Abstand zwischen dem gesteuerten Fahrzeug und dem vorausfahrenden Fahrzeug einzustellen. Weiterhin ist ein Lenkwinkelsensor zur Messung des aktuellen Lenkwinkels des gesteuerten Fahrzeugs vorgesehen. Der Lenkwinkel wird zur Bestimmung der Straßenkrümmung herangezogen, ein aktiver, automatisierter Eingriff in den Lenkwinkel ist aber nicht vorgesehen.

Weitergehende Eingriffsmöglichkeiten sind in der DE 44 07 082 A1 nicht offenbart.

Darüberhinaus ist es aus der Druckschrift US 57 81 119 bekannt, die laterale Position eines Fahrzeugs in bezug auf ein vorausfahrendes Fahrzeug einzustellen. Auf der Grundlage einer Lateralabweichung wird unter Berücksichtigung der momentanen Fahrzeuggeschwindigkeit eine Lenkwinkeleinstellung zur Korrektur der relativen Fahrzeugposition durchgeführt. Anhand einer Führung in der Fahrbahn wird die Lateralposition des vorausfahrenden Fahrzeugs festgestellt und an das nachfolgende Fahrzeug übermittelt, in welchem eine Lenkwinkelkorrektur zur Einstellung des Querabstandes vorgenommen wird. Die Lateralposition des nachfolgenden Fahrzeugs wird nicht gemessen.

Bei diesem System ist jedoch zwischen dem vorausfahrenden und dem nachfolgenden Fahrzeug ein fortwährender Datenaustausch erforderlich, um eine Quereinstellung des nachfolgenden Fahrzeugs vornehmen zu können, was einen hohen Aufwand sowohl an Systemkomponenten als auch an Informationsverarbeitung erforderlich macht. Ein Ausfall in der Bestimmungseinrichtung für die Lateralposition des Führungsfahrzeugs führt zwangsläufig auch zu einem Ausfall der Lateralkorrektur des Folgefahrzeugs.

Der Erfindung liegt das Problem zugrunde, mit einfachen Mitteln und in sicherer Weise eine automatische Querführung eines Fahrzeugs, welches einem Führungsfahrzeug nachfolgt, zu realisieren.

Dieses Problem wird erfindungsgemäß mit den Merkmalen des Anspruches 1 bzw. 14 gelöst.

Das neuartige Meß- und Steuerungssystem stützt sich grundsätzlich nur auf den Deichselwinkel, der sich bei Kurvenfahrt zwischen der Längsachse des Folgefahrzeugs und einer Verbindungslinie zwischen Führungs- und Folgefahrzeug einstellt, sowie zweckmäßig auf die Fahrzeuggeschwindigkeit des Folgefahrzeugs und zweckmäßig auf den Fahrzeugabstand zwischen vorausfahrendem Führungsfahrzeug und Folgefahrzeug. Es sind aber weder Kommunikationseinrichtungen zwischen den Fahrzeugen noch bauliche Maßnahmen zur Fahrzeugführung in oder am Rande der Straße erforderlich; durch diese Vereinfachung des Systems bzw. des Verfahrens wird eine Kostenreduzierung und eine deutliche Steigerung der Betriebssicherheit erreicht, außerdem ist eine flexible Anpassung an unterschiedliche Betriebsbedingungen und unterschiedliche Fahrzeugtypen möglich.

Als Deichselwinkel wird insbesondere der Winkel zwischen der Längsachse des Folgefahrzeugs und einer Verbindungslinie, die durch die Vorderachse des Folgefahrzeugs und die hinterste Achse des Führungsfahrzeugs verläuft, bestimmt.

Das neue Meß- und Steuerungssystem ermöglicht es, daß die hintersten Achsen von Führungsfahrzeug und Folgefahrzeug bei Kurvenfahrten in der gleichen Spur fahren. Insbesondere bei nachfolgenden Fahrzeuggespannen bzw. Sattelschleppern mit Aufliegern wird durch diese Art der Querregelung verhindert, daß die hinterste Achse des Folgefahrzeugs die Kurve schneidet. Mögliche Beschädigungen und Gefährdungen durch Kurvenschneiden werden vermieden, es wird kein zusätzlicher Bewegungsraum für das nachfolgende Fahrzeug benötigt.

Die Regelung in Abhängigkeit des Deichselwinkels ermöglicht eine unkomplizierte und schnelle Einstellung des Lateralabstandes des Folgefahrzeugs quer zur Fahrzeuglängsrichtung in bezug auf das Führungsfahrzeug.

Weitere Vorteile und zweckmäßige Ausführungsformen sind den weiteren Ansprüchen, der Figurenbeschreibung und den Zeichnungen zu entnehmen. Es zeigen:

Fig. 1  eine schematische Ansicht eines Fahrzeugs mit einem Meß- und Steuerungssystem zur Einstellung des Abstandes zwischen dem Fahrzeug und einem Führungsfahrzeug,

Fig. 2  in schematischer Darstellung eine Draufsicht auf ein Führungs- und ein mehrgliedriges Folgefahrzeug,

Fig. 3  ein Ablaufdiagramm mit den grundlegenden Verfahrensschritten für eine Regelung des lateralen Abstandes aufeinanderfolgender Fahrzeuge bei Kurvenfahrt.

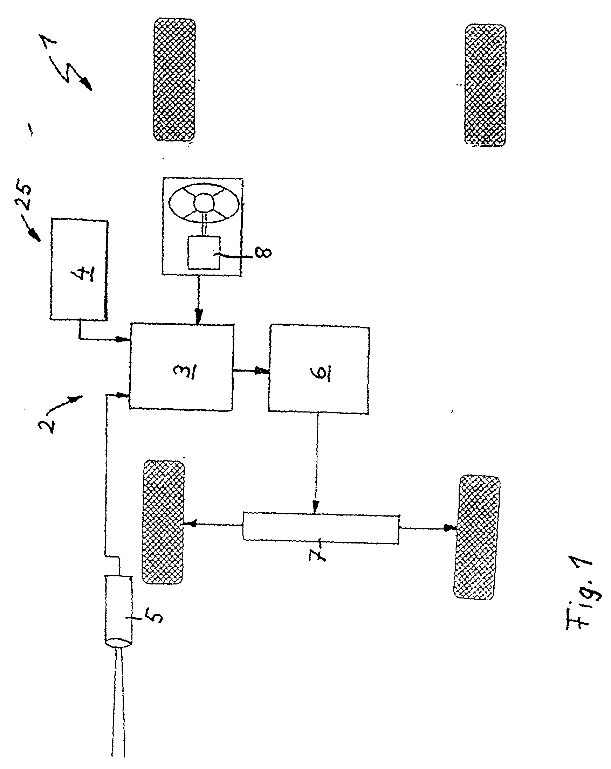

Das in Fig. 1 schematisch dargestellte Fahrzeug 1 umfaßt ein Meß- und Steuerungssystem 2, welches in Abhängigkeit sensorisch über eine zugeordnete Meßeinrichtung 25 aufgenommener Meßsignale sowie rechnerisch abgeleiteter Fahrzeug-Zustands- und Meßgrößen Stellsignale zur Beaufschlagung von Stellgliedern erzeugt, über die Fahrzeugkomponenten auf einen gewünschten Sollwert einstellbar sind. Das Meß- und Steuerungssystem 2 besteht aus einer Regel- und Steuereinheit 3, der Meßeinrichtung 25, einer Hydraulikeinheit 6 sowie einem Lenkaktuator 7, wobei gegebenenfalls weitere Aktuatoren, insbesondere für die Betätigung der Radbremsen, vorgesehen sein können, welche ebenfalls von der Regel- und Steuereinheit 3 beaufschlagt werden können. Die Meßeinrichtung 25 umfaßt eine Erfassungseinrichtung 4, eine Abstands-Erkennungseinrichtung 5 und einen Meßgeber 8. In der Regel- und Steuereinheit 3 sind Stellsignale zur Beaufschlagung der Hydraulikeinheit 6 erzeugbar, mittels der der Lenkaktuator 7 für die Lenkung der Vorderräder einstellbar ist.

Alternativ zur Ansteuerung der Lenkung mittels einer Hydraulikeinheit kann auch ein Torque-Motor direkt an der Lenksäule verwendet werden.

Die Regel- und Steuereinheit 2 verarbeitet Meßsignale, welche in der Erfassungseinrichtung 4 und der Abstands-Erkennungseinrichtung 5 erzeugt werden, sowie Meß- und Zustandsgrößen, insbesondere den Lenkwinkel bzw. aus dem Lenkwinkel abgeleitete Größen, die den aktuellen Zustand der Lenkung darstellen und über den Meßgeber 8 erfaßt werden. In der Erfassungseinrichtung 4 werden zweckmäßig fahrzeugspezifische Zustandsgrößen ermittelt, insbesondere die Fahrzeuggeschwindigkeit sowie gegebenenfalls die Straßenneigung, der Reibwert zwischen Straße und Fahrzeug etc., sowie fahrzeugspezifische Parameter, insbesondere Geometriegrößen, abgelegt. Die Abstands-Erkennungseinrichtung 5 ist vorteilhaft als videobasiertes Bildverarbeitungssystem ausgebildet, mittels dem sowohl der Abstand zwischen dem Fahrzeug und einem vorausfahrenden Fahrzeug als auch der laterale Abstand bzw. Deichselwinkel, welcher zwischen der Längsachse des dargestellten Fahrzeugs und einer Verbindungslinie ausgebildet ist, die durch die Vorderachse des Fahrzeugs und die Hinterachse eines vorausfahrenden Führungsfahrzeugs verläuft, meßbar ist.

Sowohl die Meßsignale der Erfassungseinrichtung 4, der Erkennungseinrichtung 5 als auch die Signale vom Meßgeber 8 werden als Eingangssignale der Regel- und Steuereinheit 3 zugeführt. In der Regel- und Steuereinheit 2 werden unter Berücksichtigung der Meßsignale aus der Erkennungseinrichtung 5 und der Meß- und Zustandsgrößen sowie der Fahrzeugparameter aus der Erfassungseinrichtung 4 gemäß einer hinterlegten Berechnungsvorschrift bzw. einem hinterlegten Kennfeld Lenkwinkel-Stellsignale erzeugt, welche der Hydraulikeinheit 6 zugeführt werden. Daraufhin wird der Lenkaktuator 7 gemäß der rechnerisch ermittelten Einstellung der Radlenkung von der Hydraulikeinheit 6 beaufschlagt.

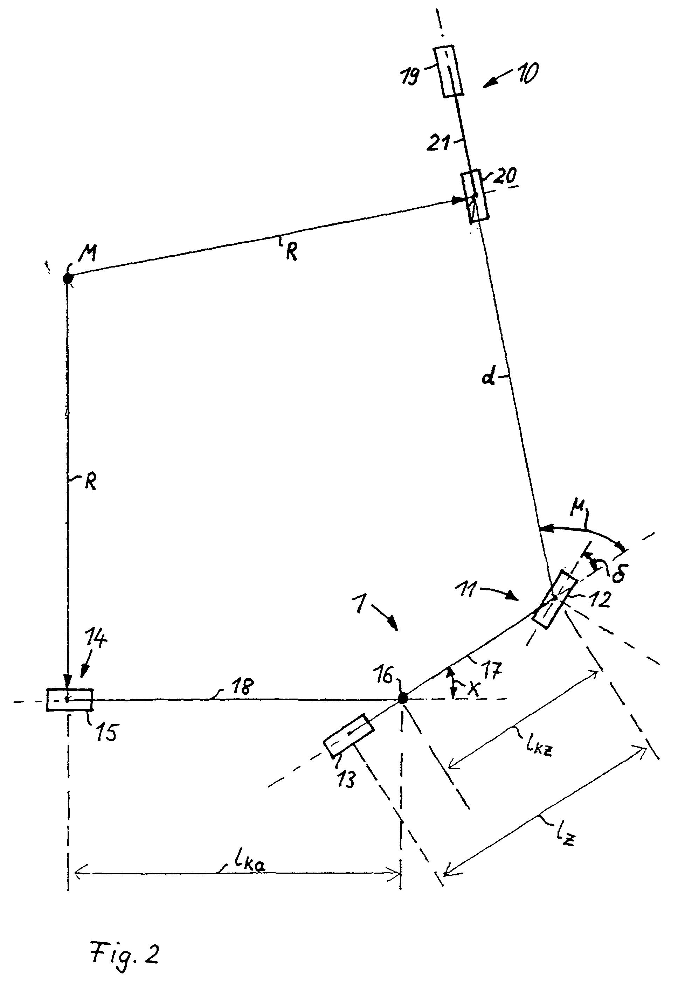

Fig. 2 zeigt ein Fahrzeug 1, das als Folgefahrzeug mit Hilfe des erfindungsgemäßen Meß- und Steuerungssystem einem vorausfahrenden Führungsfahrzeug 10 nachfolgt. Das Fahrzeug 1 ist vereinfacht als Einspur-Fahrzeugmodell dargestellt, bei dem die beiden Räder einer Achse zu einem Rad zusammengefaßt sind. Bei dem Folgefahrzeug 1 handelt es sich um ein mehrgliedriges Fahrzeug, bestehend aus einer Zugmaschine 11 mit Vorderachse 12 und Hinterachse 13 sowie einem Auflieger 14 mit hinterer Aufliegerachse 15. Die Zugmaschine 11 und der Auflieger 14 sind über einen Koppelpunkt 16 miteinander verbunden. Der Auflieger kann im Koppelpunkt 16 gegenüber der Zugmaschine verschwenkt werden, die Längsachse 17 der Zugmaschine 11 und die Längsachse 18 des Aufliegers 14 schließen im ausgelenkten Zustand des Aufliegers 14 einen Knickwinkel $\kappa$ ein. Der Abstand zwischen Vorder- und Hinterachse 12, 13 der Zugmaschine 11 ist mit $l_z$, der Abstand zwischen Vorderachse 12 und Koppelpunkt 16 mit $l_{kz}$, der Abstand zwischen der hintersten Aufliegerachse 15 und dem Koppelpunkt 16 mit $l_{ka}$ bezeichnet.

Das Führungsfahrzeug 10 ist als zweiachsiges Fahrzeug mit Vorderachse 19 und Hinterachse 20 ausgeführt. Das Führungsfahrzeug 10 ist in der Darstellung nach Fig. 2 in eine Kurve eingefahren bzw. hat bereits eine Kurve durchfahren, das Folgefahrzeug 1 folgt mittels der Signale seines Meß- und Steuerungssystems dem Führungsfahrzeug 1 nach. Aufgrund der Kurvensituation schließt die Längsachse 17 der Zugmaschine 11 des Folgefahrzeugs 1 mit der Verbindungslinie, die durch die Vorderachse des Folgefahrzeugs und die hinterste Achse des Führungsfahrzeugs verläuft, einen Deichselwinkel $\mu$ ein. Der Abstand zwischen der Hinterachse 20 des Führungsfahrzeugs 10 und der Vorderachse des Folgefahrzeugs 1 wird als Fahrzeugabstand d bezeichnet.

Aufgrund der automatischen Einstellung des Radlenkwinkels $\delta$ des Folgefahrzeugs 1 ist dieses in der Lage, in der gleichen Spur wie das Führungsfahrzeug 10 zu fahren, so daß die Hinterachse 20 des Führungsfahrzeugs 10 und die hinterste Aufliegerachse 15 des Folgefahrzeugs 1 einen Kreis mit gemeinsamem Kreismittelpunkt M und Radius R beschreiben.

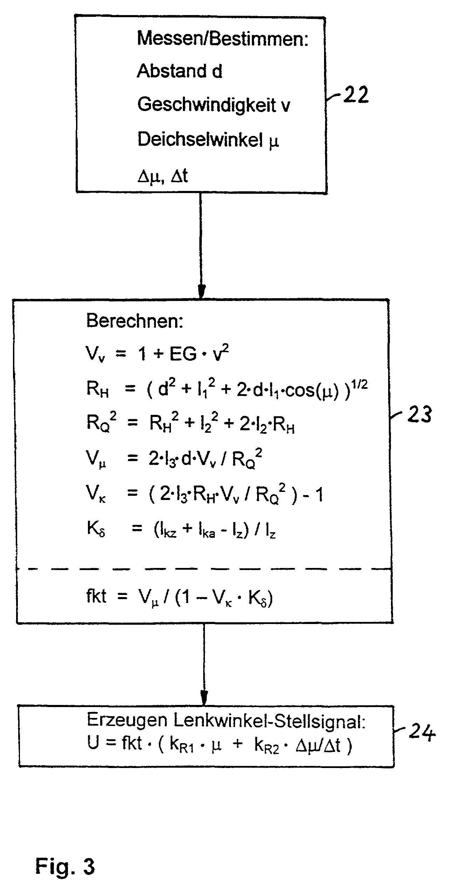

Fig. 3 zeigt ein Ablaufschema für die Abstands-Querregelung des Folgefahrzeugs in bezug auf das Führungsfahrzeug. In einem ersten Verfahrensschritt 22 werden zunächst die Fahrzeug-Zustands- und Betriebsgrößen, welche zur Querregelung benötigt werden, durch Messung und/oder Berechnung ermittelt. Es sind dies der Abstand d zwischen den Fahrzeugen, der Deichselwinkel $\mu$, die Fahrzeuggeschwindigkeit v des Folgefahrzeugs sowie gegebenenfalls zeitliche Differenzen $\Delta t$ und zugehörige Deichselwinkel-Inkremente $\Delta\mu$, über die die Deichselwinkel-Geschwindigkeit bestimmt zumindest näherungsweise werden können.

In einem folgenden, als Berechnungsblock fungierenden Verfahrensschritt 23 werden aus den im vorhergehenden Schritt 22 ermittelten Betriebs- und Zustandsgrößen unter Berücksichtigung von Geometrieparametern des Folgefahrzeugs ein Deichselwinkel-Geometrieterm $V_\mu$, ein Knickwinkel-Geometrieterm $V_\kappa$

und ein Geometrieterm $K_\delta$ ermittelt, wobei die Terme $V_\mu$ und $V_\kappa$ von einem Geschwindigkeitsterm $V_v$ abhängen. Diese Terme fließen gemäß einer hinterlegten Berechnungsvorschrift in die Berechnung einer Funktion fkt ein, die als Variable die Fahrzeuggeschwindigkeit v, den Fahrzeugabstand d und den Deichselwinkel µ enthält.

Der Geschwindigkeitsterm $V_v$ wird gemäß der Beziehung

$$V_v = 1 + EG * v^2$$

in Abhängigkeit des Quadrats der Geschwindigkeit ermittelt, wobei EG den fahrzeugspezifischen Eigenlenkgradienten bezeichnet, welcher als Parameter im System abgespeichert ist.

Für den Fall, daß das Folgefahrzeug sich mit kleinen Geschwindigkeiten unterhalb eines Geschwindigkeits-Schwellenwertes bewegt, kann auf die Berechnung des Geschwindigkeitstermes $V_v$ verzichtet werden. In diesem Fall reduziert sich der Geschwindigkeitstermes $V_v$ auf den Wert $V_v = 1$.

Der Deichselwinkel-Geometrieterm $V_\mu$ berechnet sich nach dem Zusammenhang

$$V_\mu = 2*l_3*d * V_v / R_Q^2,$$

$$R_Q^2 = R_H^2 + l_2^2 + 2*l_2*R_H$$

$$R_H = (d^2 + l_1^2 + 2*d*l_1*\cos(\mu))^{1/2}$$

in Abhängigkeit des Abstands d zwischen Führungsfahrzeug und Folgefahrzeug, des Deichselwinkels µ sowie der drei Geometrie-Ersatzgrößen $l_1$, $l_2$ und $l_3$ des Folgefahrzeugs, wobei zur Vereinfachung der Berechnung Hilfsvariablen $R_Q$ und $R_H$ eingeführt worden sind.

Der die Geometrie-Ersatzgrößen $l_1$ bis $l_3$ hängen davon ab, ob es sich bei dem Folgefahrzeug um ein eingliedriges Fahrzeug ohne Anhänger bzw. Auflieger, bei dem über die Länge des Fahrzeugs kein Knickwinkel auftreten kann, oder ein mehrgliedriges Fahrzeug mit Zugmaschine und Anhänger bzw. Auflieger, bei dem ein möglicher Knickwinkel berücksichtigt werden muß, handelt.

Im Falle eines mehrgliedrigen Fahrzeugs gemäß Fig. 2 entspricht die erste Geometrie-Ersatzgröße $l_1$ dem Abstand $l_{kz}$ zwischen der Vorderachse der Zugmaschine und dem Koppelpunkt zum Anhänger bzw. Auflieger, die zweite Geometrie-Ersatzgröße $l_2$ entspricht dem Abstand $l_{ka}$ zwischen dem Koppelpunkt und der hintersten Achse des Anhängers bzw. Aufliegers und die dritte Geometrie-Ersatzgröße $l_3$ ist identisch mit der Summe aus erster und zweiter Geometrie-Ersatzgröße.

Ebenfalls bei mehrgliedrigen Fahrzeugen kommt der Knickwinkel-Geometrieterm $V_\kappa$ zum Tragen, der nach der Vorschrift

$$V_\kappa = (2*l_3*R_H * V_v / R_Q^2) - 1$$

in Abhängigkeit des Abstands d sowie der Hilfsvariablen $R_H$ und $R_Q$ ermittelt wird.

Auch der Geometrieterm $K_\delta$ ist auf mehrgliedrige Fahrzeuge beschränkt, der zweite Geometrieterm $K_\delta$ berechnet sich ausschließlich in Abhängigkeit von fahrzeugspezifischen Geometrieparametern gemäß der Beziehung

$$K_\delta = (l_{kz} + l_{ka} - l_z) / l_z .$$

Nachdem für die Funktion fkt alle erforderlichen Vorrechnungen abgeschlossen worden sind, kann diese Funktion nun in Abhängigkeit vom Fahrzeugabstand d und der Geschwindigkeit v des Folgefahrzeugs nach der Vorschrift

$$fkt = V_\mu / (1 - V_\kappa * K_\delta)$$

berechnet werden, welche für die Erzeugung des Lenkwinkel-Stellsignals U berücksichtigt wird, das im letzten Verfahrensschritt 24 der Fig. 3 gemäß der Beziehung

$$U = fkt * (k_{R1} * \mu + k_{R2} * \Delta\mu/\Delta t)$$

in Abhängigkeit des Deichselwinkels µ und der näherungsweise berechneten Deichselwinkel-Geschwindigkeit $\Delta\mu/\Delta t$ erzeugt wird. $k_{R1}$ und $k_{R2}$ bezeichnen Reglerparameter, die konstant sein können oder aber von der Geschwindigkeit des Folgefahrzeugs abhängen können. Gegebenenfalls kann der Geschwindigkeitsterm $V_v$ unabhängig von der Höhe der Geschwindigkeit außer Betracht gelassen werden, wodurch sich der Deichselwinkel-Geometrieterm $V_\mu$ und der Knickwinkel-Geometrieterm $V_\kappa$ entsprechend vereinfachen.

Das Stellsignal U wird der Einstellung eines Lenkaktuators des Folgefahrzeugs zugrunde gelegt. Die Verfahrensschritte 22 bis 24 werden zyklisch durchlaufen, um eine fortlaufende und aktuelle Anpassung der Kurvenbahn des Folgefahrzeugs an die Kurvenbahn des Führungsfahrzeugs zu erreichen.

Im Falle eines eingliedrigen Fahrzeugs vereinfacht sich die Berechnung des Stellsignals U. Bei eingliedrigen Folgefahrzeugen ist sowohl die erste Geometrie-Ersatzgröße $l_1$ als auch die dritte Geometrie-Ersatzgröße $l_3$ identisch mit dem Achsabstand $l_z$ des Folgefahrzeugs, die zweite Geometrie-Ersatzgröße $l_2$ ist gleich Null, so daß der Deichselwinkel-Geometrieterm $V_\mu$ auf die Beziehung

$$V_\mu = 2*l_z*d * V_v / R_H^2$$

$$R_H = (d^2 + l_z^2 + 2*d*l_z*\cos(\mu))^{1/2}$$

reduziert wird.

Der zweite Geometrieterm $K_\delta$ wird im Falle eingliedriger Folgefahrzeuge gleich Null gesetzt. Dadurch vereinfacht sich die Berechnungsvorschrift für die Funktion fkt zu

$$fkt = V_\mu.$$

Der Geschwindigkeitsterm $V_v$ kann gegebenenfalls auf den Wert eins gesetzt werden.

Im übrigen wird das Lenkwinkel-Stellsignal U in gleicher Weise wie bei mehrgliedrigen Fahrzeugen in Abhängigkeit der Funktion fkt und des Deichselwinkels $\mu$ sowie gegebenenfalls der Deichselwinkel-Geschwindigkeit $\Delta\mu/\Delta t$ ermittelt.

Im Falle kleiner Deichselwinkel $\mu$ kann die Beziehung für die Hilfsvariable $R_H$ linearisiert werden zu

$$R_H = (d + l_1).$$

Unter Berücksichtigung der in dieser Weise linearisierten Hilfsvariablen $R_H$ können die Beziehungen für den Deichselwinkel-Geometrieterm $V_\mu$ und den Knickwinkel-Geometrieterm $V_\kappa$ unabhängig vom Deichselwinkel $\mu$ gemäß

$$V_\mu = 2*l_3*d * V_v / (l_1 + l_2 + d)^2$$

$$V_\kappa = (2*l_3*(l_1 + d) * V_v / (l_1 + l_2 + d)^2) - 1$$

formuliert werden.

Es kann gegebenenfalls zweckmäßig sein, das Meß- und Steuerungssystem bzw. das Verfahren mit einem Spurführungssystem für das Folgefahrzeug zu kombinieren, beispielsweise einem System zur Bilderfassung oder einer Spurführung anhand von in die Fahrbahn eingebrachter Leitungen, um gegebenenfalls eine Korrektur der Fahrspur des Folgefahrzeugs zu ermöglichen. Hierdurch kann sichergestellt werden, daß eine ungünstige oder gefährliche Fahrspur des vorausfahrenden Führungsfahrzeugs nicht zu einer Gefahrensituation des Folgefahrzeugs führt. Es kann darüberhinaus eine höhere Genauigkeit der Spurführung erreicht werden.

**Patentansprüche**

1. Meß- und Steuerungssystem zur Führung eines Fahrzeugs während einer Folgefahrt, bei der das Fahrzeug als Folgefahrzeug (1) dem vorausfahrenden Führungsfahrzeug (10) nachgeführt wird,

   - mit einer Meßeinrichtung (25) zur Messung des Fahrzeugabstandes (d) zwischen dem Folgefahrzeug (1) und dem Führungsfahrzeug (10),

   - mit einer Regel- und Steuereinheit (3) zur Erzeugung von Stellsignalen (U) in Abhängigkeit von Meßsignalen der Meßeinrichtung (25), wobei die Stellsignale (U) zur Einstellung einer Fahrzeugkomponente des Folgefahrzeugs (1) herangezogen werden und wobei ein Lenksignal U als Stellsignal zur Querführung des Folgefahrzeugs (1) erzeugt wird,

   **dadurch gekennzeichnet,**

   - **daß** in der Meßeinrichtung (25) als zusätzliches Meßsignal der Deichselwinkel $\mu$ zwischen dem Folgefahrzeug (1) und dem Führungsfahrzeug (10) ermittelt wird, welcher sich in einer Kurvenfahrt oder bei seitlichem Versatz zwischen dem Führungsfahrzeug (10) und dem Folgefahrzeug (1) als Winkel zwischen der Längsachse (17) des Folgefahrzeugs (1) und einer von der Vorderachse (12) des Folgefahrzeugs (1) zur hintersten Achse des Führungsfahrzeugs (10) verlaufenden Verbindungslinie einstellt,
   - **daß** die Regel - und Steuereinheit (3) das Lenksignal U als eine vom Deichselwinkel $\mu$ abhängige Beziehung gemäß der Vorschrift

   $$U = fkt * \mu$$

   ermittelt, wobei fkt eine vom Fahrzeugabstand (d) abhängige Funktion bezeichnet.

2. Meß- und Steuerungssystem nach Anspruch 1, **dadurch gekennzeichnet,** **daß** der Fahrzeugabstand (d) den Abstand zwischen Vorderachse (12) des Folgefahrzeugs (1) und Hinterachse (20) des Führungsfahrzeugs (10) bezeichnet.

3. Meß- und Steuerungssystem nach Anspruche 1 oder 2, **dadurch gekennzeichnet,** **daß** die Funktion fkt zusätzlich vom Deichselwinkel $\mu$ abhängig ist.

4. Meß- und Steuerungssystem nach den Ansprüchen 1 bis 3,

**dadurch gekennzeichnet,**
**daß** die Funktion |fkt| gemäß der Beziehung

$$fkt = V_\mu / (1 - K_\delta * V_\kappa)$$

darstellbar ist, worin

$V_\mu$    einen Deichselwinkel-Geometrieterm in Abhängigkeit des Fahrzeugabstandes (d) und des Deichselwinkels μ sowie gegebenenfalls der Fahrzeuggeschwindigkeit (v) des Folgefahrzeugs,

$V_\kappa$    einen Knickwinkel-Geometrieterm in Abhängigkeit des Fahrzeugabstandes (d) und des Deichselwinkels μ sowie gegebenenfalls der Fahrzeuggeschwindigkeit (v) des Folgefahrzeugs,

$K_\delta$    einen Geometrieterm in Abhängigkeit von die Fahrzeuggeometrie des Folgefahrzeugs (1) beschreibenden Parametern

bezeichnet.

**5.** Meß- und Steuerungssystem nach Anspruch 4,
**dadurch gekennzeichnet,**
**daß** der Deichselwinkel-Geometrieterm ($V_\mu$) gemäß der Beziehung

$$V_\mu = 2*l_3*d * V_v / R_Q^2$$

mit

$$V_v = 1 + EG * v^2$$

$$R_Q^2 = R_H^2 + l_2^2 + 2*l_2*R_H$$

$$R_H = (d^2 + l_1^2 + 2*d*l_1*\cos(\mu))^{1/2}$$

darstellbar ist, worin

$V_v$    einen Geschwindigkeitsterm in Abhängigkeit der Fahrzeuggeschwindigkeit (v) des Folgefahrzeugs,

EG    den fahrzeugspezifischen Eigenlenkgradienten,

v    die Geschwindigkeit des Folgefahrzeugs (1),

$R_Q$    eine erste Hilfsvariable,

$R_H$    eine zweite Hilfsvariable,

$l_1, l_2, l_3$    Geometrie-Ersatzgrößen des Folgefahrzeugs (1)

bezeichnet.

**6.** Meß- und Steuerungssystem nach Anspruch 4 oder 5,
**dadurch gekennzeichnet,**
**daß** der Knickwinkel-Geometrieterm ($V_\kappa$) gemäß der Beziehung

$$V_\kappa = (2*l_3*R_H * V_v / R_Q^2) - 1$$

darstellbar ist.

**7.** Meß- und Steuerungssystem nach Anspruch 5 oder 6,
**dadurch gekennzeichnet,**
**daß** im Falle eines eingliedrigen Folgefahrzeugs (1) ohne Anhänger bzw. Auflieger

-    die erste Geometrie-Ersatzgröße ($l_1$) identisch ist mit dem Achsabstand ($l_z$) des Folgefahrzeugs (1), die zweite Geometrie-Ersatzgröße ($l_2$) gleich Null ist und die dritte Geometrie-Ersatzgröße ($l_1$) identisch ist mit dem Achsabstand ($l_z$) des Folgefahrzeugs (1),

-    der Geometrieterm ($K_\delta$) gleich Null ist.

**8.** Meß- und Steuerungssystem nach Anspruch 5 oder 6,
**dadurch gekennzeichnet,**
**daß** im Falle eines mehrgliedrigen Folgefahrzeugs (1), bestehend aus Zugmaschine (11) und Anhänger bzw. Auflieger (14),

-    die erste Geometrie-Ersatzgröße ($l_1$) identisch ist mit dem Abstand ($l_{kz}$) zwischen der Vorderachse (12) der Zugmaschine (11) und dem Koppelpunkt (16) zum Anhänger bzw. Auflieger (14), die zweite Geometrie-Ersatzgröße ($l_2$) identisch ist mit dem Abstand ($l_{ka}$) zwischen dem Koppelpunkt (16) und der hintersten Achse (15) des Anhängers bzw. Aufliegers (14) und die dritte Geometrie-Ersatzgröße ($l_1$) identisch ist mit der Summe aus erster und zweiter Geometrie-Ersatzgröße ($l_1, l_2$),

-    der zweite Geometrieterm ($K_\delta$) gemäß der Beziehung

$$K_\delta = (l_{kz} + l_{ka} - l_z) / l_z$$

darstellbar ist, wobei

$l_{kz}$     den Abstand zwischen der Vorderachse (12) der Zugmaschine (11) und dem Koppelpunkt (16) des Anhängers bzw. Aufliegers (14),

$l_{ka}$     dem Abstand zwischen dem Koppelpunkt (16) und der hintersten Achse (15) des Anhängers bzw. Aufliegers (14)

bezeichnet.

9. Meß- und Steuerungssystem nach einem der Ansprüche 4 bis 8,
**dadurch gekennzeichnet,**
**daß** für kleine Deichselwinkel (μ) der Deichselwinkel-Geometrieterm ($V_\mu$) gemäß der linearisierten Beziehung

$$V_\mu = 2*l_3*d*V_v / (l_1 + l_2 + d)^2$$

darstellbar ist.

10. Meß- und Steuerungssystem nach einem der Ansprüche 4 bis 9,
**dadurch gekennzeichnet,**
**daß** für kleine Deichselwinkel (μ) der Knickwinkel-Geometrieterm ($V_\kappa$) gemäß der linearisierten Beziehung

$$V_\kappa = (2*l_3*(l_1 + d) * V_v / (l_1 + l_2 + d)^2) - 1$$

darstellbar ist.

11. Meß- und Steuerungssystem nach einem der Ansprüche 1 bis 10,
**dadurch gekennzeichnet,**
**daß** bei der Bestimmung des Lenksignals U zusätzlich ein Reglerparameter ($k_{R1}$) gemäß der Beziehung

$$U = fkt * k_{R1} * \mu$$

berücksichtigt wird, wobei

$k_{R1}$     den Reglerparameter

bezeichnet.

12. Meß- und Steuerungssystem nach einem der Ansprüche 1 bis 11,
**dadurch gekennzeichnet,**
**daß** bei der Bestimmung des Lenksignals U zusätzlich die Deichselwinkel-Geschwindigkeit ($\Delta\mu/\Delta t$) gemäß der Beziehung

$$U = fkt * (k_{R1} * \mu + k_{R2} * \Delta\mu/\Delta t)$$

berücksichtigt wird, wobei

$k_{R2}$     einen der Deichselwinkel-Geschwindigkeit zugeordneten Reglerparameter

bezeichnet.

13. Meß- und Steuerungssystem nach Anspruch 12,
**dadurch gekennzeichnet,**
**daß** zumindest ein Reglerparameter ($k_{R1}$, $k_{R2}$) von der Fahrzeuggeschwindigkeit (v) des Folgefahrzeugs (1) abhängt.

14. Verfahren zur Führung eines Fahrzeugs während einer Folgefahrt, bei der das Fahrzeug als Folgefahrzeug (1) dem vorausfahrenden Führungsfahrzeug (10) nachgeführt wird,

- mit einer Meßeinrichtung (25) zur Messung des Fahrzeugabstandes (d) zwischen dem Folgefahrzeug (1) und dem Führungsfahrzeug (10),

- mit einer Regel- und Steuereinheit (3) zur Erzeugung von Stellsignalen (U) in Abhängigkeit von Meßsignalen der Meßeinrichtung (25), wobei die Stellsignale (U) zur Einstellung einer Fahrzeugkomponente des Folgefahrzeugs (1) herangezogen werden und wobei ein Lenksignal U als Stellsignal zur Querführung des Folgefahrzeugs (1) erzeugt wird,

**gekennzeichnet durch**
die folgenden Verfahrensschritte:

- Messung und Bestimmung

  • des Fahrzeugabstandes (d) zwischen dem Folgefahrzeug (1) und dem Führungsfahrzeug (10),

  • des Deichselwinkels μ, der sich bei seitlichem Versatz zwischen Führungsfahrzeug und Folgefahrzeug oder in einer Kurvenfahrt als Winkel zwischen der Längsachse (17) des Folgefahrzeugs (1) und einer von der Vorderachse (12) des Folgefahrzeugs (1) zur hintersten Achse des Führungsfahrzeugs (10) verlaufenden Verbindungslinie einstellt und

  • der Fahrzeuggeschwindigkeit (v) des Folgefahrzeugs (1),

- Bestimmung eines Lenksignals |U| für das Folgefahrzeug (1) in Abhängigkeit des Deichselwinkels μ und in Abhängigkeit des Fahrzeugabstands (d) gemäß der Vorschrift

$$U = fkt * μ,$$

wobei fkt eine vom Fahrzeugabstand (d) abhängige Funktion bezeichnet.

**Claims**

1. A measurement and control system for guiding a vehicle whilst it is following another vehicle in which the vehicle as the following vehicle (1) is guided by the guide vehicle (10) driving ahead of it,

    - with a measuring device (25) for measuring the vehicle distance (d) between the following vehicle (1) and the guide vehicle (10),

    - with an automatic control unit (3) for generating positioning signals (U) dependent on measurement signals from the measuring device (25), the positioning signals (U) being used to set a vehicle component in the following vehicle (10) and a steering signal U being generated as a positioning signal for the transverse guidance of the following vehicle (1),

    **characterised in that**

    - the drawbar angle μ between the following vehicle (1) and the guide vehicle (10) set when driving around a bend or in the case of a lateral offset between the guide vehicle (10) and the following vehicle (1) as the angle between the longitudinal axis (17) of the following vehicle (1) and a connecting line running from the front axle (12) of the following vehicle (1) to the rearmost axle of the guide vehicle (10) is determined in the measuring device 925) as an additional measurement signal,

    - the automatic control unit (3) determines the steering signal U as a relationship dependent on the drawbar angle (μ) in accordance with the rule

$$U = fkt * μ,$$

    fkt designating a function dependent on the vehicle distance (d).

2. A measurement and control system in accordance with claim 1,
    **characterised in that**
    the vehicle distance (d) designates the distance between the front axle (12) of the following vehicle (1) and the rear axle (20) of the guide vehicle (10).

3. A measurement and control system in accordance with claim 1 or 2,
    **characterised in that**
    the function fkt is also dependant on the drawbar angle (μ).

4. A measurement and control system in accordance with claims 1 to 3,
    **characterised in that**
    the function fkt can be represented by the relationship

$$fkt = V_μ / (1 - K_δ * V_χ)$$

    $V_μ$    designating a drawbar angle geometry term dependent on the vehicle distance (d) and the drawbar angle μ and where applicable on the vehicle speed (v) of the following vehicle,

    $V_χ$    designating a side slip angle geometry term dependent on the vehicle distance (d) and the drawbar angle μ and where applicable on the vehicle speed (v) of the following vehicle,

    $K_δ$    designating a geometry term dependent on parameters describing the vehicle geometry of the following vehicle (1).

5. A measurement and control system in accordance with claim 4,
    **characterised in that**
    the drawbar angle geometry term ($V_μ$) can be represented in accordance with the relationship

$$V_μ = 2 * l_3 * d * V_v / R_Q^2$$

    where

$$V_v = 1 + EG * v^2$$

$$R_Q^2 = R_H^2 + l_2^2 + 2 * l_2 * R_H$$

$$R_H = (d^2 + l_1^2 + 2 * d * l_1 * cos(μ))^{1/2},$$

    $V_v$    designating a speed term dependent on the vehicle speed (v) of the following vehicle,

EG      designating the vehicle-specific roll steer gradients,

v      designating the speed of the following vehicle (1),

$R_Q$      designating a first auxiliary variable,

$R_H$      designating a second auxiliary variable,

$l_1, l_2, l_3$      designating replacement geometry values for the following vehicle (1).

6.  A measurement and control system in accordance with claim 4 or 5,
**characterised in that**
the side slip angle geometry term ($V_\chi$) can be represented in accordance with the relationship

$$V_\chi = (2 * l_3 * R_H * V_v / R_Q^2) - 1.$$

7.  A measurement and control system in accordance with claim 5 or 6,
**characterised in that**
in the case of a non-articulated following vehicle (1) without a trailer or semi-trailer

- the first replacement geometry value ($l_1$) is identical to the axle base ($l_z$) of the following vehicle (1), the second replacement geometry value ($l_2$) is zero and the third replacement geometry value ($l_1$) is identical to the axle base ($l_z$) of the following vehicle (1),

- the geometry term ($K_\delta$) is zero.

8.  A measurement and control system in accordance with claim 5 or 6,
**characterised in that**
in the case of an articulated following vehicle (1) consisting of a tractor and trailer/semi-trailer (14)

- the first replacement geometry value ($l_1$) is identical to the distance ($l_{kz}$) between the front axle (12) of the tractor (11) and the coupling point (16) to the trailer/semi-trailer (14), the second replacement geometry value ($l_2$) is identical to the distance ($l_{ka}$) between the coupling point (16) and the rearmost axle (15) of trailer/semi-trailer (14) and the third replacement geometry value ($l_1$) is identical to the sum of the first and second replacement geometry values ($l_1$, $l_2$),

- the second geometry term ($K_\delta$) can be represented by the relationship

$$K_\delta = (l_{kz} + l_{ka} - l_z) / l_z$$

$l_{kz}$    designating the distance between the front axle (12) of the tractor (11) and the coupling point (16) of the trailer/semi-trailer (14),

$l_{ka}$    designating the distance between the coupling point (16) and the rearmost axle (15) of the trailer/semi-trailer (14).

9.  A measurement and control system in accordance with one of claims 4 to 8,
**characterised in that**
for small drawbar angles ($\mu$) the drawbar geometry term ($V_\mu$) can be represented in accordance with the linearised relationship

$$V_\mu = 2 * l_3 * d * V_v / (l_1 + l_2 + d)^2.$$

10. A measurement and control system in accordance with one of claims 4 to 9,
**characterised in that**
for a small drawbar angles ($\mu$) the side slip geometry term ($V_\chi$) can be represented in accordance with the linearised relationship

$$V_\chi = (2 * l_3 * (l_1 + d) * V_v / (l_1 + l_2 + d)^2 - 1.$$

11. A measurement and control system in accordance with one of claims 1 to 10,
**characterised in that**
when determining the steering signal U a control system parameter ($k_{R1}$) in accordance with the relationship

$$U = fkt * k_{R1} * \mu$$

is also taken into account,

$k_{R1}$    designating the control system parameters.

12. A measurement and control system in accordance with one of claims 1 to 11,
**characterised in that**
when determining the steering signal U the drawbar angle speed ($\Delta\mu/\Delta t$) in accordance with the relationship

$$U = fkt * (k_{R1} * \mu * + k_{R2} * \Delta\mu/\Delta t)$$

is also taken into account,

$k_{R2}$    designating a control system parameter for the drawbar angle speed.

**13.** A measurement and control system in accordance
with claim 12,
**characterised in that**
at least one control system parameter ($k_{R1}$, $k_{R2}$) is
dependent on the vehicle speed (v) of the following
vehicle (1).

**14.** A process for guiding a vehicle whilst it is following
another vehicle in which the vehicle as the following
vehicle (1) is guided by the guide vehicle (10) driving ahead of it,

- with a measuring device (25) for measuring the
vehicle distance (d) between the following vehicle (1) and the guide vehicle (10),

- with an automatic control unit (3) for generating
positioning signals (U) dependent on measurement signals from the measuring device (25),
the positioning signals (U) being used to set a
vehicle component in the following vehicle (10)
and a steering signal U being generated as a
positioning signal for the transverse guidance
of the following vehicle (1),

**characterised by**
the following process steps:

- measurement and determination

  • of the vehicle distance (d) between the following vehicle (1) and the guide vehicle
(10),

  • of the drawbar angle μ set in the case of
lateral offset between the guide vehicle
and the following vehicle or when driving
around a bend as the angle between the
longitudinal axis (17) of the following vehicle (10) and a connecting line running from
the front axle (12) of the following vehicle
(1) to the rearmost axle of the guide vehicle
(10) and

  • of the vehicle speed (v) of the following vehicle (1),

- determination of a steering signal U for the following vehicle (1) dependent on the drawbar
angle μ and dependent upon the vehicle distance (d) in accordance with the rule

$$U = fkt * \mu$$

fkt designating a function dependent on the vehicle distance (d).

**Revendications**

**1.** Appareil de mesure et de contrôle pour le guidage
d'un véhicule pendant un trajet asservi, lors duquel
le véhicule en tant que véhicule suiveur (1) est asservi au véhicule de guidage (10) roulant devant,

- avec un appareil de mesure (25) pour la mesure de l'espacement de véhicule (d) entre le véhicule suiveur (1) et le véhicule de guidage
(10),
- avec une unité de régulation et de contrôle (3)
pour la production de signaux de commande
(U) en fonction de signaux de mesure de l'appareil de mesure (25), les signaux de commande (U) étant utilisés pour le réglage d'une composante du véhicule suiveur (1) et un signal de
braquage U étant généré comme signal de
commande pour le guidage transversal du véhicule suiveur (1),

**caractérisé en ce que**

- on détermine dans l'appareil de mesure (25)
comme signal de mesure supplémentaire l'angle de timon μ entre le véhicule suiveur (1) et
le véhicule de guidage (10), qui s'établit dans
un trajet en virage ou lors du déport latéral entre
le véhicule de guidage (10) et le véhicule suiveur (1) comme angle entre l'axe longitudinal
(17) du véhicule suiveur (1) et une ligne de
liaison allant de l'essieu avant (12) du véhicule
suiveur (1) à l'essieu le plus en arrière du véhicule de guidage (10),
- **en ce que** l'unité de régulation et de contrôle
(3) détermine le signal de braquage U comme
une relation, dépendante de l'angle de timon μ
selon la règle

$$U = fkt * \mu$$

fkt désignant une fonction dépendante de l'espacement de véhicule (d).

**2.** Système de mesure et de contrôle selon la revendication 1,
**caractérisé en ce que**
l'espacement de véhicule (d) désigne l'espacement
entre l'essieu avant (12) du véhicule suiveur (1) et
l'essieu arrière (20) du véhicule de guidage (10).

**3.** Appareil de mesure et de contrôle selon la revendication 1 ou 2,
**caractérisé en ce que**

la fonction fkt est dépendante en supplément de l'angle de timon µ.

4. Appareil de mesure et de contrôle selon les revendications 1 à 3,
**caractérisé en ce que**
la fonction fkt peut être présentée selon la règle

$$fkt = V_\mu / (1 - K_\delta * V_k)$$

$v_\mu$ désignant un terme de géométrie de l'angle de timon en fonction de l'espacement de véhicule (d) et de l'angle de timon µ ainsi qu'éventuellement de la vitesse du véhicule (v) du véhicule suiveur,
$V_k$ désignant un terme de la géométrie de l'angle de formage en fonction de l'espacement de véhicule (d) et de l'angle de timon µ ainsi qu'éventuellement de la vitesse du véhicule (v) du véhicule suiveur,
$K_\delta$ désignant un terme de géométrie en fonction de paramètres décrivant la géométrie du véhicule suiveur (l).

5. Système de mesure et de contrôle selon la revendication 4,
**caractérisé en ce que**
le terme de géométrie de l'angle de timon ($V_\mu$) peut être présenté selon la relation

$$V\mu = 2 * I_3 * V_v / R_Q^2$$

avec

$$Vv = 1 + E * v^2$$

$$R_Q^2 = R_H2 + I_2^2 + 2 * I_2 * R_H$$

$$R_H = (d^2 + I_1^2 + 2 * d * I_1 * \cos(\mu))^{1/2}$$

où

$V_v$ désigne un terme de vitesse en fonction de la vitesse du véhicule (v) du véhicule suiveur,
EG le gradient de direction propre,
v la vitesse du véhicule suiveur (1)
$R_Q$ une première variable auxiliaire,
$R_H$ une seconde variable auxiliaire
$I_1$, $I_2$, $I_3$ des grandeurs de remplacement de géométrie du véhicule suiveur (l).

6. Système de mesure et de contrôle selon la revendication 4 ou 5,

**caractérisé en ce que**
le terme de géométrie de l'angle de flambage ($V_K$) peut être présenté selon la relation

$$V_K = (2 * I_3 * R_H * V_v / R_Q^2) - 1$$

7. Système de mesure et de contrôle selon la revendication 5 ou 6,
**caractérisé en ce que**
dans le cas d'un véhicule suiveur (1) à un élément sans remorque ou semi-remorque

- la première grandeur de remplacement de géométrie ($I_1$) est identique à l'écartement des essieux ($I_z$) du véhicule suiveur (1), la seconde grandeur de remplacement de géométrie ($I_2$) est égale à zéro et la troisième grandeur de remplacement de géométrie ($I_1$) est identique à l'écartement des essieux ($I_z$) du véhicule suiveur (1),
- le terme de géométrie ($K_\delta$) est égal à zéro.

8. Système de mesure et de contrôle selon la revendication 5 ou 6,
**caractérisé en ce que**
dans le cas d'un véhicule suiveur (1) à plusieurs éléments, comprenant le véhicule tracteur (11) et la remorque ou le semi-remorque (14),

- la première grandeur de remplacement de géométrie ($I_1$) est identique à l'espacement ($I_{kz}$) entre l'essieu avant (12) du véhicule tracteur (11) et le point de couplage (16) pour la remorque ou le semi-remorque (14), la seconde grandeur de remplacement de géométrie ($I_2$) est identique à la distance ($I_{ka}$) entre le point de couplage (16) et l'essieu le plus en arrière (15) de la remorque ou du semi-remorque (14) et la troisième grandeur de remplacement de géométrie ($I_1$) est identique à la somme des première et seconde grandeurs de remplacement de géométrie ($I_1$, $I_2$),
- le second terme de géométrie ($K_\delta$) pouvant être représenté selon la relation

$$K_\delta = (I_{kz} + I_{ka} - I_z) / I_z$$

$I_{kz}$ étant l'espacement entre l'essieu avant (12) du véhicule tracteur (11) et le point de couplage (16) de la remorque ou du semi-remorque (14),
$I_{ka}$ étant l'espacement entre le point de couplage (16) et l'essieu le plus en arrière (15) de la remorque ou du semi-remorque.

9. Système de mesure et de contrôle selon l'une quelconque des revendications 4 à 8,

**caractérisé en ce que**
pour des petits angles de timon ($\mu$), le terme de géométrie de l'angle de timon ($V\mu$) peut être représenté selon la relation linéarisée suivante

$$V\mu = 2*l_3*d*V_v / (l_1 + l_2 + d)^2$$

**10.** Système de mesure et de contrôle selon l'une quelconque des revendications 4 à 9,
**caractérisé en ce que**
pour des petits angles de timon ($\mu$), le terme de géométrie de l'angle de formage ($V_k$) peut être représenté selon la relation linéarisée suivante

$$V_k = (2*l_3*l_1 + d) * V_v / (l_1 + l_2 + d)^2 - 1$$

**11.** Système de mesure et de contrôle selon l'une quelconque des revendications 1 à 10,
**caractérisé en ce que**
pour le calcul du signal de braquage U, on tient compte en supplément d'un paramètre de régulateur ($k_{R1}$) selon la relation

$$U = fkt * k_{R1} * \mu$$

$k_{R1}$ désignant le paramètre du régulateur.

**12.** Système de mesure et de contrôle selon l'une quelconque des revendications 1 à 11,
**caractérisé en ce que**
pour le calcul de l'angle de braquage U, on tient compte en supplément de la vitesse de l'angle de timon ($\Delta\mu / \Delta t$) selon la relation

$$U = fkt * (k_{R1} * \mu + k_{R2} * \Delta\mu/\Delta t)$$

$k_{R2}$ désignant un paramètre de régulateur attribué à la vitesse de l'angle de timon.

**13.** Système de mesure et de contrôle selon la revendication 12,
**caractérisé en ce que**
au moins un paramètre de régulateur ($k_{R1}$, $k_{R2}$) dépend de la vitesse (v) du véhicule suiveur (l).

**14.** Procédé pour le guidage d'un véhicule pendant un trajet asservi, lors duquel le véhicule en tant que véhicule suiveur (1) est asservi au véhicule de guidage (10) roulant devant,

- avec un appareil de mesure (25) pour la mesure de l'espacement de véhicule (d) entre le véhicule suiveur (1) et le véhicule de guidage (10),

- avec une unité de régulation et de contrôle (3) pour la génération de signaux de commande U en fonction de signaux de mesure de l'appareil de mesure (25), les signaux de commande U pour le réglage d'une composante du véhicule suiveur (1) étant utilisés et un signal de braquage U en tant que signal de commande étant généré pour le guidage transversal du véhicule suiveur (1),

**caractérisé par**
les étapes de procédé suivantes :

- mesure et calcul

  • de l'espacement de véhicule (d) entre le véhicule suiveur (1) et le véhicule de guidage (10),
  • de l'angle de timon $\mu$, qui s'établit en cas de déport latéral entre le véhicule de guidage et le véhicule suiveur ou dans un trajet en virage comme angle entre l'axe longitudinal (17) du véhicule suiveur (1) et une ligne de liaison allant de l'essieu avant (12) du véhicule suiveur (1) à l'essieu le plus en arrière du véhicule de guidage (10), et
  • de la vitesse (v) du véhicule suiveur (1),

- calcul d'un signal de braquage U pour le véhicule suiveur (1) en fonction de l'angle de timon $\mu$ et en fonction de l'espacement de véhicule (d) selon la règle

$$U = fkt * \mu,$$

fkt désignant une fonction dépendante de la distance de véhicule (d).

Fig. 1

Fig. 2

Messen/Bestimmen:

Abstand d

Geschwindigkeit v

Deichselwinkel $\mu$

$\Delta\mu, \Delta t$

— 22

Berechnen:

$V_v = 1 + EG \cdot v^2$

$R_H = ( d^2 + l_1{}^2 + 2 \cdot d \cdot l_1 \cdot \cos(\mu) )^{1/2}$

$R_Q{}^2 = R_H{}^2 + l_2{}^2 + 2 \cdot l_2 \cdot R_H$

$V_\mu = 2 \cdot l_3 \cdot d \cdot V_v / R_Q{}^2$

$V_\kappa = ( 2 \cdot l_3 \cdot R_H \cdot V_v / R_Q{}^2 ) - 1$

$K_\delta = (l_{kz} + l_{ka} - l_z) / l_z$

- - - - - - - - - - - - - - - - - - - - - - - - - -

$fkt = V_\mu / (1 - V_\kappa \cdot K_\delta)$

— 23

Erzeugen Lenkwinkel-Stellsignal:
$U = fkt \cdot ( k_{R1} \cdot \mu + k_{R2} \cdot \Delta\mu/\Delta t )$

— 24

Fig. 3